# EUROPÄISCHE PATENTANMELDUNG

(11) **EP 0 762 064 A1**
(43) Veröffentlichungstag der Anmeldung: **12.03.1997**
(21) Anmeldenummer: 96114127.2
(22) Anmeldetag: 04.09.1996
(51) Int. Cl.: F25B 41/06, F25B 30/02

(54) **Durchsatzregelung für das Kältemittel einer Wärmepumpe und Verfahren**

(30) Priorität: 08.09.1995 AT 1494/95
(71) Anmelder: Weider, Fritz, Ing., 6900 Bregenz (AT)
(72) Erfinder: Weider, Fritz, Ing., 6900 Bregenz (AT)
(74) Vertreter: Hefel, Herbert, Dipl.-Ing.

(57) **Zusammenfassung**

Durchsatzregelung für das Kältemittel einer Wärmepumpe mit mindestens einem Verdampfer (1), einem Kompressor (2), einem Verflüssiger (3), der zwei getrennte Kanalsysteme aufweist, von welchen das eine vom Kältemittel und das andere von einem Medium eines Heizkreises (6) durchströmt ist, einem gesteuerten Expansionsventil (4) und mindestens zwei Temperaturfühlern (21, 23) zur Regelung des Expansionsventiles (4), die mit einer Steuereinheit (5) verbunden sind, welche direkt oder indirekt mit einem das Expansionsventil (4) betätigenden Stellglied, beispielsweise einem Stellmotor verbunden ist, wobei der eine Temperaturfühler (23) im Bereich des Einganges des Mediums des Heizkreises (6) des Verflüssigers (3) vorgesehen ist und wobei der andere Temperaturfühler (21) im Bereich zwischen dem Kältemittelausgang des Verflüssigers (3), oder gegebenenfalls zwischen dem Kältemittelausgang eines dem Verflüssiger (3) nachgeschalteten Flüssigkeitsunterkühlers und dem Expansionsventil (4) vorgesehen ist.

## Beschreibung

Die Erfindung bezieht sich auf eine Durchsatzregelung für das Kältemittel einer Wärmepumpe mit mindestens einem Verdampfer, einem Kompressor, einem Verflüssiger, der zwei getrennte Kanalsysteme aufweist, von welchen das eine vom Kältemittel und das andere von einem Medium eines Heizkreises durchströmt ist, einem gesteuerten Expansionsventil und mindestens zwei Temperaturfühlern zur Regelung des Expansionsventiles, die mit einer Steuereinheit verbunden sind, welche direkt oder indirekt mit einem das Expansionsventil betätigenden Stellglied, beispielsweise einem Stellmotor verbunden ist, wobei der eine Temperaturfühler im Bereich des Einganges des Mediums des Heizkreises des Verflüssigers vorgesehen ist und auf das Verfahren zur Durchsatzregelung.

Eine Durchsatzregelung dieser Art ist aus der US-PS 4 498 310 bekannt, wenn die dort gezeigte Einrichtung in der einen Stellung des 4-Wegeventils als Wärmepumpe geschaltet ist. Die Temperatur des ersten Temperaturfühlers soll dabei den Zustand auf der Hochdruckseite des Systems reflektieren. Der zweite Temperaturfühler dieser Einrichtung mißt die Eingangstemperatur des den Verdampfer durchsetzenden Mediums einer Wärmequelle. Diese Temperatur entspricht somit einem Zustand der Niederdruckseite des Systems. Anhand dieser beiden Temperaturen wird das Expansionsventil durch einen Vergleich mit gespeicherten Kennwerten geregelt. Es liegt bei diesem System immer (und zwar unabhängig von der Stellung des 4-Wegeventils) ein Sensor auf der Hochdruckseite und ein Sensor auf der Niederdruckseite des Systems.

Eine Durchsatzregelung, bei der zur Regelung des Expansionsventils zwei Temperaturfühler vorgesehen sind, ist auch aus der EP-PS 133 512 bekannt. Hierbei ist der Regler als Proportionalintegralregler ausgebildet, dessen Temperaturfühler die Temperatur der Kältemittelleitung zwischen dem Expansionsventil und dem Eingang des Verdampfers abfühlt. Ein weiterer Eingang des PI-Reglers ist an eine Meßleitung angelegt, die mit einem Außentemperaturfühler verbunden ist. Ein Ausgang des PI-Reglers ist über ein Spannungs-/Zeitumformglied mit einer Stelleitung für den Elektromagneten des Expansionsventils verbunden. Ferner ist ein Zweipunktregler vorgesehen, dessen eine Eingang mit einer zu einem Temperaturfühler gehenden Meßleitung verbunden ist, wobei dieser Temperaturfühler an eine Kältemitteldampfleitung zwischen dem Ausgang des Verdampfers und einem Kältetauscher angeschlossen ist, wobei ein Ausgang des Zweipunktreglers über ein Zeitglied mit einem Steuerteil verbunden ist, das in den Ausgang des PI-Reglers geschaltet ist. Der Zweck dieser Maßnahme liegt darin, eine Durchsatzregelung für ein pulspausentaktgesteuertes Expansionsventil zu schaffen, die in Abhängigkeit von der Außentemperatur und dem Wärmebedarf des Verbrauchers dafür sorgt, daß dem Verdampfer innerhalb der Grenzen, die sich aus einem Überfüllen des Verdampfers mit nicht verdampfbarem Kältemittel und einem zu starken Überhitzen des Kältemittels ergeben, ein optimaler Kältemitteldurchsatz zugeführt wird.

Aus der US-PS 5 415 008 ist eine Kältemaschine bekannt, bei der die Temperatur auf der Niederdruckseite des Systems zwischen Verdampfer und Kompressor direkt oder indirekt gemessen wird und das Expansionsventil aufgrund der Temperatur des Kältemittels auf der Niederdruckseite geregelt wird.

Die EP-PS 158 581 beschreibt ein Verfahren zum Betreiben einer Kälteanlage mit einem Verdampfer. Am Verdampfer, der zwei getrennte Kanalsysteme aufweist, von denen das eine vom Kältemittel durchströmt ist und das andere vom Medium der Wärmequelle, sind zwei Temperaturfühler angeordnet, die die Eingangstemperatur und die Ausgangstemperatur des Mediums der Wärmequelle messen. Ist die Temperatur des Mediums im Verdampfer niedriger als die Temperatur des den Verdampfer verlassenden Mediums, so wird die Kälteanlage abgeschaltet. Dadurch soll der Verdampfer vor Vereisung geschützt werden.

Schlußendlich ist noch die EP-OS 78 928 zu erwähnen, die ein Verfahren zur Regelung der umlaufenden Kältemittel in einem Kältemittelkreislauf beschreibt. In der aus Verdampfer, Kompressor, Kondensator und zwischen Kondensator und Verdampfer angeordneten Drosselorgan bestehenden Vorrichtung wird die Temperatur des noch flüssigen Kältemittels im Endbereich der Verdampfungszone und die Temperatur des gasförmigen Kältemittels im Bereich der Überhitzungszone gemessen und die Temperaturdifferenz mit einem vorgegebenen Sollwert verglichen. Bei Abweichung der ermittelten Temperaturdifferenz vom Sollwert wird das Drosselorgan geöffnet oder geschlossen, um das Gleichgewicht herzustellen. Die Temperaturmessungen erfolgen durch Thermofühler, die mit einem Differenzbildner verbunden sind, dem ein mit einem Sollwertgeber ausgerüsteter Vergleicher nachgeschaltet ist. Dieser Vergleicher ist über ein Stellungsbefehlsgerät an einem das Drosselorgan betätigenden Motor angeschlossen. Damit kann das Drosselorgan für unterschiedliche Kältemittel bzw. Kältemittelgemische und für unterschiedliche Verdampfungstemperaturen verwendet werden.

Ausgehend von diesem Stand der Technik zielt die Erfindung darauf ab, die Effizienz einer Wärmepumpe zu erhöhen durch eventuelle Unterkühlung des Kältemittels im Verflüssiger (Kondensator), was erfindungsgemäß dadurch gelingt, daß der andere Temperaturfühler im Bereich zwischen dem Kältemittelausgang des Verflüssigers, oder gegebenenfalls zwischen dem Kältemittelausgang eines dem Verflüssiger nachgeschalteten Flüssigkeitsunterkühlers und dem Expansionsventil vorgesehen ist. Das mit dieser Einrichtung durchgeführte erfindungsgemäße Verfahren ist nun dadurch gekennzeichnet, daß der eine Temperaturfühler die Temperatur des den Verflüssiger verlassenden bzw. des im Ausgangsbereich des Verflüssigers befindlichen Kältemittels mißt und der andere Temperaturfühler die Temperatur des in den Verflüssiger einströmenden Mediums des Heizkreises. Mit steigender Temperaturdifferenz zwischen der Temperatur des den Verflüssiger verlassenden bzw. des im Ausgangsbereich des Verflüssigers befindlichen Kältemittels einerseits und der Temperatur des in den Verflüssiger einströmenden Mediums des Heizkreises wird der Durchlaßquerschnitt des Expansionsventiles verkleinert und bei abnehmender Temperaturdifferenz vergrößert.

Durch die erfindungsgemäße Einrichtung und das erfindungsgemäße Verfahren kann in besonders vorteilhafter Weise auf den Zustand auf der Hochdruckseite des Systems reagiert werden. Dem gerade kondensierten, jetzt flüssigen Kältemittel, das zu diesem Zeitpunkt eine ganz bestimmte, vom Arbeitsdruck abhängige Kondensationstemperatur hat, kann weiter Wärme entzogen werden, so daß es unterkühlt wird. Gemäß der Erfindung öffnet das Expansionsventil erst dann, wenn das verflüssigte Kältemittel entsprechend stark unterkühlt wird, wobei die Öffnungsstellung des Ventils umso größer ist, je tiefer die Unterkühlung ist. Wenn die beiden Fühler eine Temperaturdifferenz von nahezu 0 °C erreicht haben, ist die maximale Öffnung erreicht und das Ventil wird nicht mehr weiter geöffnet.

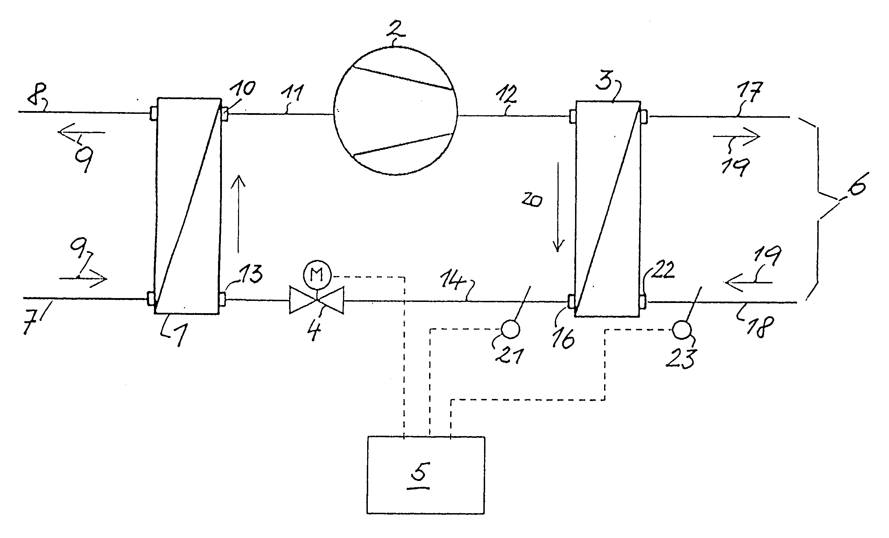

Die Zeichnung veranschaulicht ein Ausführungsbeispiel der Erfindung.

Die Wärmepumpe besitzt einen Verdampfer 1, einen Kompressor 2, einen Verflüssiger 3, ein Expansionsventil 4 mit einem Stellmotor M und eine Steuereinheit 5.

Der Verdampfer 1 ist als Plattenwärmetauscher ausgebildet mit zwei getrennten Kanalsystemen, von welchen das eine vom Kältemittel durchströmt ist und das andere Kanalsystem hier beispielsweise vom Wasser einer Wärmequelle, das über die Leitung 7 dem Verdampfer 1 zugeführt und das über die am Verdampfer 1 oben angeschlossene Leitung abgeleitet wird. Die Flußrichtung dieses Mediums ist durch die Pfeile 9 angedeutet.

Der Verdampfer 1 ist ferner über die Kältemittelleitung 1, die am oberen Anschluß 10 angeschlossen ist, mit dem Kompressor 2 verbunden, der hochdruckseitig über die Leitung 12 mit dem oberen Anschluß des Verflüssigers 3 verbunden ist. Die Kältemittelrückführleitung 14, in der das gesteuerte Expansionsventil 4 angeordnet ist, verbindet den unteren Anschluß 16 des Verflüssigers 3 mit dem unteren Anschluß 13 des Verdampfers 1.

Der Verflüssiger 3, der hier ebenfalls als Plattenwärmetauscher ausgebildet ist, ist über die Leitung 17 (Vorlaufleitung) und über die Leitung 18 (Rücklaufleitung) mit einem hier nicht näher dargestellten Heizkreis 6 verbunden. Die Pfeile 19 und 20 veranschaulichen die Strömungsrichtungen der den Verflüssiger 3 durchsetzenden Medien.

Im Bereich des unteren Anschlusses 16 der Kältemittelrückführleitung 14 ist ein erster Temperaturfühler 21 angeordnet. Im Bereich des unteren Anschlusses 22 der Rückführleitung 18 des Heizkreises 6 ist ein zweiter Temperaturfühler 23 vorgesehen. Diese beiden Temperaturfühler 21 und 23 sind mit einem in der Steuereinheit 5 vorgesehenen Differenzbildner verbunden, der seinerseits eventuell über weitere Schaltglieder auf den Stellmotor M des Expansionsventiles 4 einwirkt. Das Expansionsventil 4 wird über die Differenz der von den beiden Temperaturfühlern 21 und 23 gemessenen Temperatur gesteuert, und zwar in der Weise, daß mit steigender Temperaturdifferenz zwischen der Temperatur des den Verflüssiger verlassenden bzw. des im Ausgangsbereich des Verflüssigers befindlichen Kältemittels einerseits und der Temperatur des in den Verflüssiger einströmenden Mediums des Heizkreises andererseits der Durchlaßquerschnitt des Expansionsventiles verkleinert und bei abnehmender Temperaturdifferenz vergrößert wird.

Dank des erfindungsgemäßen Vorschlages arbeitet die Wärmepumpe mit hoher Effizienz, da dem Kältemittel im Verflüssiger die ihm innewohnende Wärmeenergie soweit wie möglich über das Medium des Heizkreises entzogen wird und erst dann, wenn das flüssige Kältemittel eine hinreichend niedere Temperatur im Vergleich zur Temperatur des rücklaufenden Mediums des Heizkreises 6 im Verflüssiger 3 erreicht hat, vergrößert das Expansionsventil 4 seinen Durchlaßquerschnitt und ermöglicht so einen ausreichenden Zufluß des verflüssigten Kältemittels zum Verdampfer 1.

Die vorstehend näher beschriebenen Wärmetauscher können auch anders als beschrieben ausgebildet sein. Auch kann in der Kältemittelleitung 11, die den Verdampfer 1 und den Kompressor 2 verbindet, ein Flüssigkeitsabscheider angeordnet sein. Die Wärmepumpe kann auch mehrere unterschiedlich aufgebaute Verdampfer besitzen, und ebenso können mehrere Verflüssiger parallel oder hintereinander geschaltet sein. Beim gezeigten Ausführungsbeispiel führt die Kältemittelrückführleitung 14 vom Verflüssiger 3 direkt zum Expansionsventil 4. Es ist möglich, in diesen Leitungszug einen Flüssigkeitsunterkühler anzuordnen, der als Wärmetauscher ausgebildet ist und der dem Verflüssiger 3 nachgeschaltet ist. In diesem Fall ist der Temperaturfühler 21 zwischen dem Kältemittelausgang dieses Flüssigkeitsunterkühlers und dem Expansionsventil 4 anzuordnen.

## Patentansprüche

1. Durchsatzregelung für das Kältemittel einer Wärmepumpe mit mindestens einem Verdampfer (1), einem Kompressor (2), einem Verflüssiger (3), der zwei getrennte Kanalsysteme aufweist, von welchen das eine vom Kältemittel und das andere von einem Medium eines Heizkreises (6) durchströmt ist, einem gesteuerten Expansionsventil (4) und mindestens zwei Temperaturfühlern (21, 23) zur Regelung des Expansionsventiles (4), die mit einer Steuereinheit (5) verbunden sind, welche direkt oder indirekt mit einem das Expansionsventil (4) betätigenden Stellglied, beispielsweise einem Stellmotor verbunden ist, wobei der eine Temperaturfühler (23) im Bereich des Einganges des Mediums des Heizkreises (6) des Verflüssigers (3) vorgesehen ist, dadurch gekennzeichnet, daß der andere Temperaturfühler (21) im Bereich zwischen dem Kältemittelausgang des Verflüssigers (3), oder gegebenenfalls zwischen dem Kältemittelausgang eines dem Verflüssiger (3) nachgeschalteten Flüssigkeitsunterkühlers und dem Expansionsventil (4) vorgesehen ist.

2. Durchsatzregelung nach Anspruch 1, dadurch gekennzeichnet, daß die Steuereinheit (5) einen Differenzbildner zur Bildung der Differenz der von den beiden Temperaturfühlern (21, 23) gemessenen Temperaturen aufweist.

3. Verfahren zur Durchsatzregelung nach Anspruch 1 oder 2, dadurch gekennzeichnet, daß der eine Temperaturfühler (23) die Temperatur des in den Verflüssiger (3) einströmenden Mediums des Heizkreises (6) mißt und der andere Temperaturfühler (21) die Temperatur des den Verflüssiger (3) bzw. den Flüssigkeitsunterkühler verlassenden bzw. des im Ausgangsbereich des Verflüssigers (3) bzw. des Flüssigkeitsunterkühlers befindlichen Kältemittels mißt.

4. Verfahren nach Anspruch dadurch gekennzeichnet, daß mit steigender Temperaturdifferenz zwischen der Temperatur des den Verflüssiger (3) bzw. den Flüssigkeitsunterkühler verlassenden bzw. des im Ausgangsbereich des Verflüssigers (3) bzw. des Flüssigkeitsunterkühlers befindlichen Kältemittels einerseits und der Temperatur des in den Verflüssiger (3) einströmenden Mediums des Heizkreises (6) der Durchlaßquerschnitt des Expansionsventiles (4) verkleinert und bei abnehmender Temperaturdifferenz vergrößert wird.
